# EUROPÄISCHE PATENTSCHRIFT

(11) **EP 2 012 037 B1**
(45) Veröffentlichungstag und Bekanntmachung des Hinweises auf die Patenterteilung: **20.10.2010**
(21) Anmeldenummer: 08012088.4
(22) Anmeldetag: 04.07.2008
(51) Int. Cl.: F16D 66/02

(54) **Federclip zur Festigung eines Sensors an einer Bremsbelag-Rückenplatte einer Scheibenbremse**
Spring clip for attaching a sensor to a brake lining backplate of a disk brake
Clip à ressort destiné à la fixation d'un capteur sur un plateau de frein pour plaquette de frein d'un frein à disque

(30) Priorität: 05.07.2007 DE 102007031403
(43) Veröffentlichungstag der Anmeldung: 07.01.2009
(73) Patentinhaber: Hirschmann Automotive GmbH, 6830 Rankweil-Brederis (AT)
(72) Erfinder: Wille, Manuel, 6830 Rankweil (AT); Jäger, Günter, 6840 Götzis (AT)
(74) Vertreter: Greif, Thomas

(56) Entgegenhaltungen:
- EP-A- 0 974 767
- DE-A1- 10 019 654
- DE-A1- 19 609 452
- DE-A1-102006 016 851
- US-A1- 2005 077 122

## Beschreibung

Die Erfindung betrifft eine Halterungsanordnung für einen Bremsbelag-Verschleißsensor In einer Bremsbelag-Rückenplatte durch einen Federclip, der im Wesentlichen U-förmig ausgebildet den Verschleißsensor zumindest abschnittsweise in einer korrespondierenden Aussparung der Bremsbetad-Rückenpiatte verliersicher hält, indem Teilbereiche von Schenkeln des Federclips an der Aussparung und and den Verschleißsensor anliegen, gemäß den Merkmalen des Oberbegriffes des Patentanspruches 1.

Bremsbelag-Verschleißsensoren, die in einer Bremsbelag-Rückenplatte angeordnet sind und den Verschleiß eines Brernsbalages einer Scheibenbremse eines Kraftfahrzeuges erfassen und ein Ausgangssignal erzeugen, sind beispielsweise aus der DE 34 25 670 C2, DE 32 30 266 C2, DE 31 32 954 C1, DE 43 40 452 A1, DE 39 04 673 A1, DE 70 47 480 U oder DE 695 07 820 T2 bekannt.

Eine Heltemngsanordnung für einen Bremsbeiag-Verschieißsensor in einer Bremsbelag-Rückenplatte einer Scheibenbremse eines Fahrzeuges ist aus der DE 10 2006 016 851 A1 bekannt. Bei dieser Halterungsanordnung wird ebenfalls ein Federclip eingesetzt, wobei jeder Federclip-Schenkel zumindest abschnittsweise derart wellenförmlg gestaltet ist, dass er an zumindest vier Anlagepunkten, von denen einander benachbarte, zumindest geringfügig voneinander beabstandet sind, an der Bremsbelag-Rückenplatte und/oder am Sensor-Gehäuse anliegt, so dass der Verschleißsensor auf Grund der durch die mehreren Anlagepunkte erzeugen Federwirkung im Wesentlichen spielfrei in der Aussparung gehalten ist. Diese an und für sich zufrieden stellende Halterungsanordnung mittels eines Federclips bewirkt, dass der Versehlelβsensor unter Federkraft In der Aussparung der Bremsbelag-Rückenplette gehalten wird. Durch diese Ausgestaltung des Federclips werden die unter widrigen Umständen auftretenden Geräuschprobleme lediglich tellweise beseitigt, allerdings nicht vollständig. Denn es hat sich im Betrieb von Scheibenbremsen in Fahrzeugen herausgestellt, dass trotz dieser bekannten Ausgestaltung des Federclips nach wie vor Geräuschprobleme auftreten.

Aus der gattungsgemäßen EP-A-0 974 767 Ist eine Halterungsanordnung für einen Bremsbelag-Verschleißsensor in einer Bremsbelag-Rüekenplatte durch einen Federclip bekannt, der im Wesentlichen U-förmig ausgebildet den Verschleißsensor zumindest abschnittsweise in einer korrespondierenden Aussparung der Bremsbelag-Rückenplatte verllersicher hält, Indem Teilbereiche von Schenkeln des Federclips an der Aussparung und an den Verschleißsensor anliegen, wobei von dem Federclip abschnittsweise zumindest eine Abwinklung absteht, die zumindest teilweise auf der Oberfläche der Bremsbelag-Rückenplatte zur Anlage kommt, wenn der Verschleißsensor mittels des Federclips in die Aussparung eingesetzt ist.

Daher liegt der Erfindung die Aufgabe zu Grunde, die nach wie vor auftretenden Geräuschprobleme, die unter widrigen Umständen durch eine Relativbewegung des Bremsbelag-Verschleißsensors in Bezug auf die Bremsbelag-Rückenplatte auftreten, dahingehend zu beseitigen, dass sie nicht mehr oder nicht mehr In störender Welse auftreten, und gleichzeitig die Montage des Federclips der Halterungsanordnung zu vereinfachen.

Diese Aufgabe ist durch die Merkmale des Patentsanspruches 1 gelöst.

Erfindungsgemäß ist vorgesehen, dass eine Abwinklung an einem vorderen Ende des Federclips angeordnet ist, d.h., in einem Bereich, in dem die beiden In etwa parallel verlaufenden Schenkel durch eine Bogenform miteinander verbunden sind. Durch diese Abwinklung im Bereich des vorderen Endes des Federclips, gegebenenfalls auch unter Zuhilfenahme der seitlichen Abwinklungen, wird die Montage des Federclips vereinfacht, da durch diese vordere Abwinklung der Federclip geführt In die Aussparung eingesetzt werden kann.

Die zumindest teilweise abschnittsweise Anlage der Abwinklung des Federclips, die sich andererseits an dem Verschleißsensor abstützt, auf der Oberfläche der Bremsbelag-Rückenplatte hat den Vorteil, dass der Bremsbelag-Verschleißsensor sich relativ und senkrecht zu der Oberfläche der Bremsbelag-Rückenplatte In zumindest einer Richtung, vorzugsweise in beide Richtungen, nicht mehr bewegen kann und damit die durch die bisher vorhandene Bewegungsmöglichkelt die störenden Geräusche unterbunden werden. Die zumindest teilwelse abschnittsweise vorhandnen Abwinklungen an dem Federclip können von der einen Stirnseite der Schenkel des Federclips abgewinkelt, beispielsweise im Wesentlichen rechtwinklig abgewinkelt sein, wobei es darüber hinaus auch denkbar ist, dass solche Abwinklungen an beiden Stirnseiten der Schenkel das Federclips abstehen und nach dessen Einsetzen in die Aussparung der Rückenplatte deren Oberflächen einschießen.

Damit bietet der erflndungsgemäße im Wesentlichen U-förmlg ausgestaltete Federclip den Vorteil, dass er einfach zu montieren ist, womit eine einfache Montage des Bremsbelag-Verschleißsensors in der Aussparung der Bremsbefag-Rückanplatte einhergeht. Außerdem ist ein solcher Federclip aus entsprechendem Material, z.B. einem Federstahl, in einem einfachen Verfahren, vorzugsweise in einem Stanzbiegeverfahren, einfach, schnell und kostengünstig in großen Stückzahlen herstellbar und bietet in besonders vorteilhafter Weise eine Lösung dafür, dass störende Geräusche, die aus einer Relativbewegung des Verschleißsensors in Bezug auf die Bremsbelag-Rückenplatte entstehen, wirksam unterbunden werden.

Ein Ausführungsbeispiel eines Federclips, auf das die Erfindung Jedoch nicht beschränkt ist, ist Im Folgenden beschrieben und anhand der Figuren erläutert.

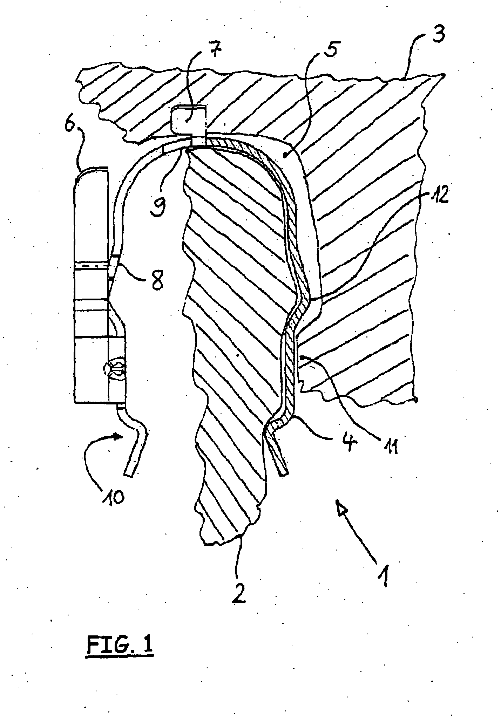

Die Figuren 1 bis 4 zeigen, soweit im Einzelnen dargestellt, gemäß Figur 1 eine Halterungsanordnung 1 für einen Bremsbelag-Verschleißsensor 2, der hier schraffiert und ausschnittsweise gezeigt ist. Der Verschleißsensor 2 wird in einer Bremsbelag-Rückenplatte 3, ebenfalls schraffiert und ausschnittsweise dargestellt, durch einen Federclip 4 gehalten, wobei der Federclip 4 Im Wesentlichen U-förmig ausgebildet ist und den Verschleißsensor 2 zumindest abschnittsweise in einer korrespondierenden Aussparung 5 der Bremsbelag-Rückenplatte 3 verliersicher hält, indem Teilbereiche von Schenkeln, Insbesondere die seitlichen und In etwa parallel ausgerichteten Schenkel des Federclips 4 an der Aussparung 5 und an dem Verschlsißsensor 2 anliegen. Innerhalb der Aussparung 5 in der Bremsbelag-Rückenplatte 3 können noch innen weisende und einander gegenüber liegende Nasen vorhanden sein, an denen sich die Schenkel des Federclips 4 abschnittsweise anschmiegen.

Der Federclip 4 ist erfindungsgemäß **dadurch gekennzeichnet, dass** abschnittsweise zumindest eine Abwinklung 6, 7 absteht, die zumindest an einem seitlichen Schenkel 8, vorzugsweise an beiden seitlichen Schenkeln, und an einem vorderen Ende 9 angeordnet sind. Die Abwinklungen 6, 7 kommen zumindest teilweise auf der Oberfläche der Bremsbelag-Rückenplatte 3 zur Anlage, wenn der Verschleißsensor 2 mittels des entsprechend gestalteten Federclips 4 in die Aussparung 5 eingesetzt ist. Dies ist in Figur 1 besonders gut anhand der Abwinkelung 7 an dem vorderen Ende 9 des Federclips 4 zu erkennen. Es sei noch darauf hingewiesen, dass bei Betrachtung der Figur 1 nicht nur an dem linken seitlichen Schenkel 8 des Federclips 4 die Abwlnklung 6 vorhanden ist, sondern auch an dem rechten seitlichen Schenkel. Ebenso ist es denkbar, dass die eine Abwinklung 7 an dem vorderen Ende 9 des Federclips 4 nur einmal im Scheitelpunkt des Bogens vorhanden ist, wobei es auch denkbar ist, dass neben den Scheitelpunkt ebenfalls nur eine Abwinklung 7 oder auch mehr als eine Abwinklung 7 vorhanden ist.

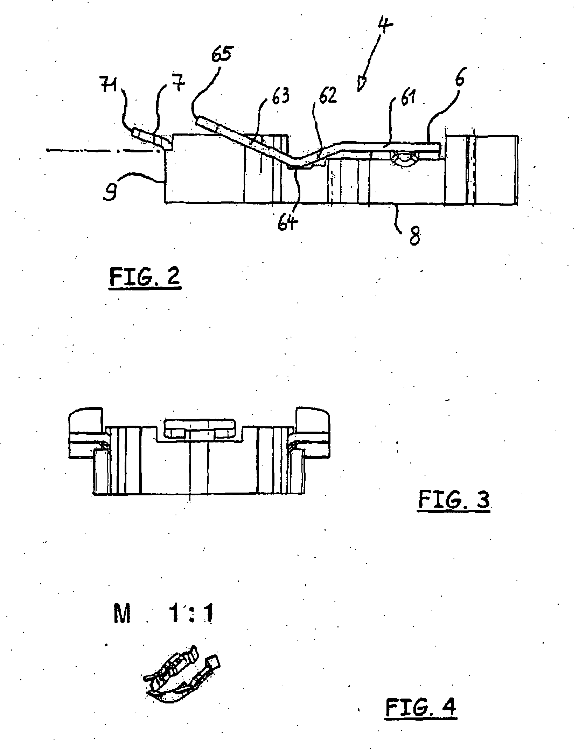

Die Figur 2 zeigt den Federclip 4 von der Seite, wobei wiederum die seitlichen Schenkel 8 sowie das vordere Ende 9, welches bogenförmig die beiden seitlichen Schenkel 8 miteinander verbindet, erkennbar ist. In dieser speziellen Ausgestaltung Ist der in etwa rechtwinklig von dem seitlichen Schenkel 8 abstehende Abwinklung 6 In einer besonderen Form in ihrer axialen Ausrichtung gestaltet. Ein erster Abschnitt 61, über den diese Abwinklung an dem seitlichen Schenkel 8 angeordnet ist, schließt sich ein weiterer Abschnitt 62, der bei Betrachtung der Figur 2 nach unten gerichtet ist an, wobei sich danach ein nach oben gerichteter weitere Abschnitt 63 anschließt. Der Übergang der beiden Abschnitte 62, 63 bildet einen Anlagepunkt 64, mit dem sich die Abwinklung 6 auf der Oberfläche der Bremsbelag-Rückenplatte 3 im montierten Zustand abstützt. Das vordere Ende 65 des Abschnittes 63 weist nach oben und ermöglicht durch diese Formgestaltung bzw. Ausrichtung ein gezieltes und geführtes Einsetzen des Federclips 4 in die Aussparung 5 der Bremsbelag-Rückenplatte 3.

Gleiches gilt für die zumindest eine Abwinklung 7 Im Bereich des vorderen Endes 9, die ebenfalls In ihrem vorderen Endbereich 71 nach oben ausgerichtet ist, um den Einsetzvorgang des Federclips 4 in die Aussparung 5 zu erleichtern. Das Niveau der Oberfläche der Bremsbelag-Rückenplatte 3 ist In Figur 2 links strichpunktiert angedeutet, so dass sich der Federclip 4 mittels der vorderen Abwinklung 7 zumindest im Übergangsbereich von dem vorderen Ende 9 bis in Richtung des vorderen Endes 71 der Abwinklung 7 an der Bremsbeiag-Rückenpiatte 3 abstützt und somit in diesem Bereich einen Formschluss zwischen der Bremsbelag-Rückenplatte 3 und dem Verschleißsensor 2 bildet. Gleiches gilt für die Abwinklung 6, die allerdings unter Federkraft den Verschleißsensor 2 an der Bremsbelag-Rückenplatte 3 festlegt, da die frei schwebenden Abschnitte 61 (nur teilweise) sowie 62 und 63 beim Einsetzen des Verschleißsensors 2 in der Bremsbelag-Rückenplatte 3 bei Betrachtung der Figur 2 nach oben ausgelenkt werden, so dass nach dem Einsetzen der Anlagepunkt 64 auf der Oberfläche der Bremsbelag-Rückenplatte 3 zur Anlage kommt.

Die Figur 3 zeigt der Vollständigkeit halber den Federclip 4 bei Betrachtung in Richtung des vorderen Endes 9 und die Figur 4 einen erfindungsgemäß gestalteten Federclip im Maßstab 1:1.

Zur Ausgestaltung eines Federclips 4 wird noch auf folgendes hingewiesen. Die Abwinklungen 6, 7 können einstückig zusammen mit dem Federclip 4 ausgebildet sein, so dass der Federclip 4 aus einem Blechstreifen ausgestanzt und entsprechend seiner Formgebung umgebogen wird. Daneben ist es denkbar, dass die Abwinklung 6 und/oder 7 durch ein entsprechendes Fügeverfahren, wie z.B. Löten oder Schweißen, zunächst als separate Bauteile ausgebildet und an den Federclip 4 angefügt werden.

Weiterhin weist der Federclip 4 dem vorderen 9 abgewandt und an seinem offenen Ende ebenfalls eine Abwinklung 10 auf, wobei diese Abwinklung 10 die Handhabe des Federclips 4 beim Einsetzen in die Aussparung 5 erleichtert, da durch diese Abwinklung 10 zunächst eine größere Einführöffnung für den Verschleißsensor 2 gegeben ist, so dass dieser zusammen mit dem Federclip 4 einfacher in die Aussparung 5 eingesetzt werden kann.

Die Abwinklung 7 am vorderen Ende 9 des Federclips 4 kann breiter, gleich breit oder schmaler sein, als der Übergangsbereich zu der Stirnseite des Federclips 4 in diesem vorderen Endbereich 9. Vorzugsweise wird, wie in Figur 1 dargestellt, der Übergangsbereich von dem Federclip 4 in Richtung der Abwinklung 7 schmaler sein, als die Breite der gesamten Abwinklung, 7, um eine ausreichend große Auflagefläche sowie Abstützung des Federclips 4 auf der Oberfläche der Bremsbeiag-Rückenplatte 3 zu ermöglichen.

Auch bei dieser Ausgestaltung weist die Bremsbelag-Rückenplatte 3 nach innen weisenden Nasen 11 auf, an denen sich der Federclip 4 mit seinem seitlichen Schenkel abschnittsweise und vorzugsweise planparallel abstützt. Bei Betrachtung der Figur 1 In Montagerichtung gesehen weitet sich der Federclip 4 zu einer Aufweitung 12 auf, wobei die Aufweitung 12 nach dem Einsetzen des Federclips 4 in die Aussparung 5 in Montagerichtung hinter den Nasen 11 zur Anlage kommt, so dass dadurch der Federclip 4 verliersicher in der Aussparung 5 eingesetzt ist.

## Patentansprüche

1. Halterungsanordnung (1) für einen Bremsbelag-Verschleißsensor (2) in einer Bremsbefag-RÜckenplatte (3) mit einem Federclip (4), der Im Wesentlichen U-förmlg ausgebildet den Verschlelßsensor (2) zumindest abschnittsweise in einer korrespondierenden Aussparung (5) der Bremsbeiag-Rückenplatte (3) verllersicher hält, wenn der Verschleißsensor (2) mittels des Federclips (4) in die Aussparung (5) eingesetzt ist, indem Tellbereiche von Schenkeln des Federclips (4) an der Aussparung (5) und an den Verschleißsensor (2) anliegen, wobei von dem Federclip (4) abschnittswelse zumindest eine Abwinklung (6, 7) absteht, die zumindest tellweise auf der Oberfläche der Bremsbelag-Rückenplatte (3) zur Anlage kommt, **dadurch gekennzelchnet, dass** die zumindest eine Abwinklung (7) an einem vorderen Ende (9) des Federclips (4) angeordnet ist, wobei das vordere Ende (9) in einem Bereich liegt, in dem die beiden etwa parallel verlaufenden Schenkel durch eine Bogenform miteinander verbunden sind.

2. Haiterungsanordnung (1) nach Anspruch 1, **dadurch gekennzeichnet, dass** die zumindest eine Abwinklung (6) an einem seitlichen Schenkel (8) des Federclips (4) angeordnet ist.

3. Halterungsanordnung (1) nach Anspruch 2, **dadurch gekennzeichnet, dass** jeweils eine Abwinklung (6) an den beiden seitlichen Schenkeln (8) des Federclips (4) angeordnet ist.

4. Halterungsanordnung (1) nach Anspruch 3, **dadurch gekennzeichnet, dass** die Abwinklung (7) breiter, gleich breit oder schmaler ist als der Übergangsbereich von der Abwinklung (7) zu dem vorderen Ende (9) des Federclips (4).

5. Halterungsanordnung (1) nach einem der vorhergehenden Ansprüche, **dadurch gekennzeichnet, dass** ein vorderes Ende (65, 71) einer Abwinklung (6, 7) schräg nach oben gerichtet und von der Bremsbeiag-Rückenplatte (3) abstehend ausgebildet ist.

6. Halterungsanordnung (1) nach einem der vorhergehenden Ansprüche, **dadurch gekennzeichnet, dass** die Abwinklung (6) mittels eines ersten Abschnittes (61) an dem seitlichen Schenkel (8) des Federclips (4) angeordnet ist und ausgehend von dem ersten Abschnitt (61) sich ein weiterer Abschnitt (62) in die eine Richtung und davon ausgehend ein weiterer Abschnitt (63) in eine davon entgegen gesetzte Richtung anschließt, wobei der Übergang von den beiden Abschnitten (62, 63) einen Anlagepunkt (64) bildet, mit dem die Abwinklung (6) unter Vorspannung auf der Oberfläche der Bremsbeiag-Rückenplatte (3) zur Anlage kommt)

7. Halterungsanordnung (1) nach einem der vorhergehenden Ansprüche, **dadurch gekennzeichnet, dass** die Abwinklungen (6, 7) In etwa rechtwinklig von der seitlichen Oberfläche des Federclips (4) abstehen.

8. Halterungsanordnung (1) nach einem der vorhergehenden Ansprüche, **dadurch gekennzeichnet, dass** der Federclip (4) mit den Abwinklungen (6, 7) ein einstücklges Bauteil bildet.

9. Halterungsanordnung (1) nach einem der vorhergehenden Ansprüche, **dadurch gekennzeichnet, dass** zumindest eine der Abwinklungen (6, 7), vorzugsweise alle Abwinklungen, separate Bauteile gebildet haben und an dem Federclip (4) angefügt sind.

## Claims

1. Mount arrangement (1) for a brake lining wear sensor (2) in a brake lining backplate (3) having a spring clip (4) which is of essentially U-shaped design and, when the wear sensor (2) is inserted into a corresponding recess (5) in the brake lining backplate (3), holds the wear sensor (2) in a captive fashion at least in certain sections in the recess (5) by virtue of the fact that regions of limbs of the spring clip (4) bear against the recess (5) and against the wear sensor (2), wherein at least one angled portion (6, 7), which comes to bear at least partially on the surface of the brake lining backplate (3), protrudes from the spring clip (4) at least in certain sections, **characterized in that** the at least one angled portion (7) is arranged at a front end (9) of the spring clip (4), wherein the front end (9) is located in a region in which the two limbs which extend approximately in parallel are connected to one another by an arcuate shape.

2. Mount arrangement (1) according to Claim 1, **characterized in that** the at least one angled portion (6) is arranged on a lateral limb (8) of the spring clip (4).

3. Mount arrangement (1) according to Claim 2, **characterized in that** in each case an angled portion (6) is arranged on the two lateral limbs (8) of the spring clip (4).

4. Mount arrangement (1) according to Claim 3, **characterized in that** the angled portion (7) is wider, of the same width or narrower than the junction region between the angled portion (7) and the front end (9) of the spring clip (4).

5. Mount arrangement (1) according to one of the preceding claims, **characterized in that** a front end (65, 71) of an angled portion (6, 7) is embodied in such a way that it is directed obliquely upward and protrudes from the brake lining backplate (3).

6. Mount arrangement (1) according to one of the preceding claims, **characterized in that** the angled portion (6) is arranged on the lateral limb (8) of the spring clip (4) by means of a first section (61), and starting from the first section (61) a further section (62) adjoins in one direction, and starting therefrom a further section (63) adjoins in an opposite direction, wherein the junction between the two sections (62, 63) forms a bearing point (64) with which the angled portion (6) comes to bear on the surface of the brake lining backplate (3) with prestress.

7. Mount arrangement according to one of the preceding claims, **characterized in that** the angled portions (6, 7) protrude from the lateral surface of the spring clip (4) approximately at a right angle.

8. Mount arrangement (1) according to one of the preceding claims, **characterized in that** the spring clip (4) forms a single-piece component with the angled portions (6, 7).

9. Mount arrangement (1) according to one of the preceding claims, **characterized in that** at least one of the angled portions (6, 7), preferably all of the angled portions, forms/form separate components and are joined to the spring clip (4).

## Revendications

1. Dispositif de support (1) pour un détecteur d'usure de garniture de frein (2) dans une plaque arrière de garniture de frein (3) comportant une lame-ressort (4), qui essentiellement en forme de U maintient de manière imperdable le détecteur d'usure (2) au moins sur des portions dans un évidement (5) correspondant de la plaque arrière de garniture de frein (3), quand le détecteur d'usure (2) est inséré au moyen de la lame-ressort (4) dans l'évidement (5), en ce que des régions partielles de pans de la lame-ressort (4) viennent reposer sur l'évidement (5) et sur le détecteur d'usure (2), au moins un coude (6,7) dépassant de la lame-ressort (4) sur des portions, lequel vient reposer au moins partiellement sur la surface de la plaque arrière de garniture de frein (3), **caractérisé en ce que** ledit au moins un coude (7) est disposé sur une extrémité avant (9) de la lame-ressort (4), l'extrémité avant (9) étant située dans une région, dans laquelle les deux pans s'étendant approximativement parallèlement sont reliés l'un à l'autre par une forme d'arc.

2. Dispositif de support (1) selon la revendication 1, **caractérisé en ce que,** ledit au moins un coude (6) est disposé sur un pan latéral (8) de la lame-ressort (4).

3. Dispositif de support (1) selon la revendication 2, **caractérisé en ce que** un coude respectif (6) est disposé sur les deux pans latéraux (8) de la lame-ressort (4).

4. Dispositif de support (1) selon la revendication 3, **caractérisé en ce que** le coude (7) est plus large, de même margeur ou plus mince que la région de transition du coude (7) à l'extrémité avant (9) de la lame-ressort (4).

5. Dispositif de support (1) selon une des revendications précédentes, **caractérisé en ce que** une extrémité avant (65,71) d'un coude (6,7) est orientées en oblique vers le haut et est réalisée en saillie à partir de la plaque arrière de garniture de frein (3).

6. Dispositif de support (1) selon une des revendications précédentes, **caractérisé en ce que** le coude (6) est disposé au moyen d'une première portion (61) sur le pan latéral (8) de la lame-ressort (4) et à partir de la première portion (61) se rattache à une autre portion (62) dans une direction et en partant de là se rattache à une autre portion (63) dans une direction opposée à cette direction, la transition entre les deux portions (62,63) formant un point de positionnement (64), avec lequel le coude (6) vient reposer sous une précontrainte sur la surface de la plaque arrière de garniture de frein (3).

7. Dispositif de support (1) selon une des revendications précédentes, **caractérisé en ce que** les coudes (6,7) saillent approximativement à angle droit de la surface latérale de la lame-ressort (4).

8. Dispositif de support (1) selon une des revendications précédentes, **caractérisé en ce que** la lame-ressort (4) forme avec les coudes (6,7) un composant en un seul tenant.

9. Dispositif de support (1) selon une des revendications précédentes, **caractérisé en ce que** au moins un des coudes (6,7), de préférence tous les coudes, forment des composants séparés et sont assemblés à la lame-ressort (4).
